Europäisches Patentamt

European Patent Office

Office européen des brevets

(11) Veröffentlichungsnummer: **0 415 277 A2**

# EUROPÄISCHE PATENTANMELDUNG

(21) Anmeldenummer: 90116214.9

(22) Anmeldetag: 24.08.90

(51) Int. Cl.5: **C08F 6/18**, C08F 10/00

(30) Priorität: 01.09.89 DE 3929054

(43) Veröffentlichungstag der Anmeldung:
06.03.91 Patentblatt 91/10

(84) Benannte Vertragsstaaten:
AT BE DE ES FR GB IT NL

(71) Anmelder: BASF Aktiengesellschaft
Carl-Bosch-Strasse 38
W-6700 Ludwigshafen(DE)

(72) Erfinder: Palma-Fellenberg, Alfredo, Dr.
Ave,Lomas Anahuac No.133 FrondosoTorre
E-Depto1501
ColLomas de las Palmas
52760Huixcuilucan(MX)
Erfinder: Fischer, Joachim, Dr.
Frankenweg 5
W-6716 Dirmstein(DE)

(54) Verfahren zur Herstellung von perlförmigen Olefinpolymeren.

(57) Perlförmige Olefinpolymerisate werden aus grießförmigen Olefinpolymerisaten durch Erhitzen in wäßriger Suspension auf Temperaturen von mindestens 10°C oberhalb ihres DSC-Maximums erhalten. Die Einarbeitung von Farbstoffen, Stabilisatoren und/oder anderen Füllstoffen kann dabei dadurch erfolgen, daß man die grießförmigen Olefinpolymerisate zuvor damit beschichtet. Die perlförmigen Polymerisate finden Verwendung zur Herstellung von Schaumstoffperlen nach dem Imprägnierverfahren.

EP 0 415 277 A2

## VERFAHREN ZUR HERSTELLUNG VON PERLFÖRMIGEN OLEFINPOLYMEREN

Bei der Gasphasenpolymerisation von Olefinen in Gegenwart von Übergangsmetallkatalysatoren fallen die Olefinpolymerisate im allgemeinen in Form eines Grießes an, der eine große Oberfläche aufweist. Dieser Grieß ist ungeeignet für die Weiterverarbeitung und wird daher, im allgemeinen unter Zusatz üblicher geeigneter Additive, zuerst in einem Extruder aufgeschmolzen, ausgepreßt und anschließend zu Granulat zerkleinert.

Der Erfindung lag daher die Aufgabe zugrunde, die aufwendige und teure Extruderverarbeitung, bei der das Polymere thermisch stark belastet wird, zu vermeiden und auf einfache Weise den Grieß in eine unmittelbar weiterverarbeitbare Form umzuwandeln.

Es wurde nun überraschenderweise gefunden, daß man perlförmige Olefinpolymerisate erhält, wenn man durch Gasphasenpolymerisation hergestellte grießförmige Olefinpolymerisate in wäßriger Suspension auf Temperaturen von mindestens 10° C oberhalb ihres DSC-Maximums erhitzt.

Das so erhaltene perlförmige Granulat ist sehr gut rieselfähig, es weist eine optimal kleine Oberfläche auf. Es kann leicht durch Imprägnieren mit einem Treibmittel und anschließendes Aufschäumen in perlförmige Schaumstoffteilchen umgewandelt werden.

Durch das neue Verfahren können gleichzeitig etwaige Katalysatorrückstände im Olefinpolymerisat desaktiviert werden. Das neue Verfahren erlaubt es auch, gleichzeitig übliche zusatzstoffe wie Farbstoffe, Stabilisatoren, Gleitmittel u.ä. in das Polymerisat einzuarbeiten. Dies erfolgt zweckmäßig dadurch, daß man zunächst das grießförmige Polymere mit den Stabilisatoren, Farbstoffen und/oder anderen Additiven beschichtet. Bei anschließender thermischer Behandlung diffundieren die Additive in das Polymere.

Geeignete Olefinpolymerisate sind Homo- und Copolymere von $\alpha$-Olefinen, wie Polyethylen, Polypropylen, Polybutylen, Ethylen-Propylen-Copolymere, Ethylen-Butylen-Copolymere, Ethylen-Hexylen-Copolymere, Ethylen-Octylen-Copolymere und Propylen-Butylen-Copolymere.

Die verwendeten Olefinpolymerisate sind grießförmig mit einem mittleren Teilchendurchmesser etwa zwischen 0,1 und 2 mm, vorzugsweise zwischen 0,2 und 1,5 mm, insbesondere zwischen 0,3 und 1 mm, und zeigen eine große, stark zerklüftete Oberfläche.

Das Erhitzen des Grießes erfolgt in wäßriger Suspension, wobei man zweckmäßig ein übliches anorganische oder organisches Dispergierhilfsmittel zufügt, um ein Zusammenfließen der Polymerpartikel zu verhindern. Geeignete Dispergiermittel sind z.B. Tricalciumphosphat und wasserlösliche organische Polymere, wie Polyvinylalkohol, Polyethylenoxid, Polypropylenoxid, Copolymere aus Ethylenoxid und Propylenoxid oder Polyvinylpyrrolidon. Vorteilhaft arbeitet man zusätzlich in Gegenwart einer geringen Menge eines Netzmittels, wie Natrium-dodecylbenzolsulfonat.

Die Suspension wird unter Rühren kurze zeit, etwa 5 bis 60, vorzugsweise 10 bis 30 Minuten, auf eine Temperatur von mindestens 10° C oberhalb des DSC-Maximums des Polymeren erhitzt. Temperaturen, die etwa 15 bis 50° C oberhalb des DSC-Maximums liegen, sind im allgemeinen ausreichend.

Die Bestimmung des DSC-Maximums des Schmelzbereichs des Polymeren erfolgte mittels Differential-Kalorimeter DSC 2 der Fa. Perkin Elmer bzw. 9900 der Fa. DuPont mit Aufheizraten von 20° C/min bis $T_{max}$ = 180° C. Die eingesetzte Polymermenge variierte zwischen 5 und 10 mg.

Nach dem Abkühlen wird das perlförmige Produkt abgetrennt und getrocknet. Es ist geeignet für die Weiterverarbeitung, z.B. durch Spritzguß oder Extrusion, bzw. zur Herstellung von polyolefinschaumstoffperlen nach dem Imprägnierverfahren.

Die in den Beispielen genannten Teile sind Gewichtsteile.

Beispiel 1

6000 Teile eines Ethylen-Propylen-Copolymeren mit einem Ethylengehalt von 2,6 Gew.-% in Grießform der mittleren Teilchengröße von 0,5 bis 2,0 mm (DSC-Maximum 150° C) wurden mit folgenden zusatzstoffen trocken vermischt und beschichtet:

0,2 Gew.-% Al-distearat

0,16 Gew.-% Pentaerythrityl-tetrakis-[3-(3,5-di-tert.butyl-4-hydroxiphenyl)-propionat (Irganox 1010 der Fa. Ciba Geigy AG)

0,29 Gew.-% $\beta,\beta'$-Thiodipropionsäuredistearylester (Irganox PS 802 der Fa. Ciba Geigy AG)

0,025 Gew.-% Tetrakis-[2,4-di-tert.butylphenylen]-4,4'-bisphenylendiphosphonit (Irgafos P-EPQ der Fa. Ciga Geigy AG)

0,05 Gew.-% Dehydrotalcit (DHT der Fa. Kyowa Chem. Ind. Co. Ltd.) 0,1 Gew.-% Ca-stearat

Das Copolymere wurde zusammen mit 204 Teilen Tricalciumphosphat als Dispergiermittel und 6,5 g einer 15 %igen wäßrigen Lösung von Natriumdodecylbenzolsulfonat in 16.300 Teilen Wasser dispergiert und unter kräftigem Rühren (420 U/min) in einem Druckgefäß innerhalb von 64 Minuten auf 168° C erhitzt. (Aufheizgeschwindigkeit 2,3° C/min.)

Nach dem Abkühlen wurde das Polymerisat abgetrennt, gewaschen und getrocknet. Die erhaltenen Teilchen waren annähernd kugelförmig und zeigten einen mittleren Teilchendurchmesser von 0,5 bis 2,0 mm.

Beispiel 2

Es wurde wie in Beispiel 1 gearbeitet, jedoch als zusätzliches Beschichtungsmittel 1 Gew.-% Neptun Schwarz X60 (Solvent Black 3, C.I. Nr. 26150) verwendet. Zur Verbesserung der Haftung der Additive wurden 0,2 bis 0,4 Gew.-% einer Mischung von Weißöl und Glycerinmonooleat (Haftvermittler W 1700 der Fa. BASF Lacke + Farben AG) zugesetzt und die Mischung aus Polymer und Additiven kurze Zeit auf 80°C erwärmt. Der Ansatz wurde wie in Beispiel 1 weiterbehandelt. Es wurden einheitlich schwarz gefärbte und stabilisierte annähernd kugelförmige Teilchen mit einem mittleren Durchmesser von 0,5 bis 2,0 mm erhalten.

Beispiel 3

Es wurde wie in Beispiel 1, jedoch unter Verwendung von 1 Gew.-% Paliotol Schwarz K 0080 (Pigment Black 1, C.I. Nr. 50 440) als zusätzlichem Additiv gearbeitet. Die Mischung aus Polymer und Additiven wurde kurze Zeit bei über 100°C getempert. Der Ansatz wurde wie in Beispiel 1 weiterverarbeitet. Es wurden einheitlich schwarz gefärbte und stabilisierte, annähernd kugelförmige Teilchen mit einem Durchmesser von 0,5 bis 2,0 mm erhalten.

**Ansprüche**

1. Verfahren zur Herstellung von perlförmigen Olefinpolymerisaten, dadurch gekennzeichnet, daß man durch Gasphasenpolymerisation hergestellte grießförmige Olefinpolymerisate in wäßriger Suspension auf Temperaturen von mindestens 10°C oberhalb ihres DSC-Maximums erhitzt.

2. Verfahren gemäß Anspruch 1, dadurch gekennzeichnet, daß man die grießförmigen Olefinpolymerisate zuvor mit Farbstoffen, Stabilisatoren und/oder anderen Additiven beschichtet oder imprägniert.

3. Verwendung der nach dem Verfahren gemäß Anspruch 1 bis 2 hergestellten perlförmigen Olefinpolymeren zur Herstellung von Schaumstoffperlen nach dem Imprägnierverfahren.